(19) Europäisches Patentamt
European Patent Office
Office européen des brevets

(11) **EP 3 215 764 B1**

(12) **EUROPÄISCHE PATENTSCHRIFT**

(45) Veröffentlichungstag und Bekanntmachung des Hinweises auf die Patenterteilung:
**04.07.2018  Patentblatt 2018/27**

(21) Anmeldenummer: **15793761.6**

(22) Anmeldetag: **06.11.2015**

(51) Int Cl.:
*F16H 61/12* *(2010.01)*    *B60K 23/08* *(2006.01)*

(86) Internationale Anmeldenummer:
**PCT/EP2015/075901**

(87) Internationale Veröffentlichungsnummer:
**WO 2016/071491 (12.05.2016 Gazette 2016/19)**

(54) **VERFAHREN ZUM BETREIBEN EINES KRAFTFAHRZEUGS MIT ZU- UND ABSCHALTBAREM ALLRADANTRIEB UNTER ERMITTLUNG EINER WINKELBESCHLEUNIGUNG VON BAUTEILEN, DIE BEIM ABSCHALTEN DES ALLRADANTRIEBS ABGEKOPPELT WERDEN**

METHOD FOR OPERATING A MOTOR VEHICLE COMPRISING AN ALL-WHEEL DRIVE THAT CAN BE ENABLED AND DISABLED BY DETERMINING AN ANGULAR ACCELERATION OF COMPONENTS WHICH ARE UNCOUPLED WHEN THE ALL-WHEEL DRIVE IS DISABLED

PROCÉDÉ POUR FAIRE FONCTIONNER UN VEHICULE AUTOMOBILE À ENTRAÎNEMENT À QUATRE ROUES MOTRICES CONNECTABLE ET DÉCONNECTABLE POUR DETERMINER L'ACCÉLÉRATION ANGULAIRE DE COMPOSANTS QUI SONT DÉSACCOUPLÉS LORS DE LA DÉCONNEXION DE L'ENTRAÎNEMENT À QUATRE ROUES MOTRICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2014   DE 102014016376**

(43) Veröffentlichungstag der Anmeldung:
**13.09.2017   Patentblatt 2017/37**

(73) Patentinhaber: **Audi AG**
**85045 Ingolstadt (DE)**

(72) Erfinder:
• **WEIDEMANN, Dieter**
  **85134 Stammham (DE)**
• **HANICKEL, Heiko**
  **85110 Kipfenberg (DE)**
• **KOLB, Florian**
  **85049 Ingolstadt (DE)**
• **BRÜHL, Hans Jörg**
  **85092 Kösching (DE)**

(74) Vertreter: **Lehle, Josef**
**AUDI AG**
**Patentabteilung**
**85045 Ingolstadt (DE)**

(56) Entgegenhaltungen:
**DE-U1-202009 007 977    US-A1- 2007 193 793**

**Beschreibung**

Die Erfindung betrifft ein Verfahren zum Betreiben eines Kraftfahrzeugs mit einem zu- und abschaltbarem Allradantrieb und einem Antriebsstrang, der zwei von einem Steuergerät angesteuerte Kupplungen zum Zu- und Abschalten des Allradantriebs und zwischen den Kupplungen rotierende Bauteile umfasst, die bei zugeschaltetem Allradantrieb angetrieben werden und bei abgeschaltetem Allradantrieb vom übrigen Antriebsstrang abgekoppelt sind.

Aus der DE 10 2012 020 908 A1 der Anmelderin ist bereits ein Verfahren der eingangs genannten Art zum Betreiben eines Kraftfahrzeugs mit Allradantrieb bekannt, das eine permanent angetriebene Primär- oder Vorderachse und eine zu- und abschaltbare Sekundär- oder Hinterachse aufweist, deren Antrieb von einem Steuergerät in Abhängigkeit von einer momentanen Fahrsituation zu bzw. abgeschaltet wird. Einer der wesentlichen Vorteile eines solchen zu- und abschaltbaren Allradantriebs besteht darin, dass der Kraftstoffverbrauch des Kraftfahrzeugs minimiert werden kann, indem der Allradantrieb abgeschaltet wird, wenn er nicht benötigt wird, um dadurch insbesondere die Leistungsverluste oder das Schleppmoment des Achsgetriebes der abschaltbaren Sekundär- oder Hinterachse zu minimieren.

Der Antriebsstrang des Kraftfahrzeugs gemäß DE 10 2012 020 908 A1 umfasst eine sogenannte Allradkupplung in Form einer Kupplung, die bei zugeschaltetem Allradantrieb geschlossen ist und das von der Brennkraftmaschine bereitgestellte Moment auf beide Achsen des Kraftfahrzeugs verteilt und die bei abgeschaltetem Allradantrieb geöffnet ist und das von der Brennkraftmaschine bereitgestellte Moment nur der permanent angetriebenen Primär- oder Vorderachse zuführt. Die zuschaltbare Sekundär- oder Hinterachse umfasst eine zweite Kupplung in Form einer Trennkupplung, die zusammen mit der Allradkupplung geschlossen und geöffnet wird. Zwischen den beiden Kupplungen befinden sich mehrere rotierende Bauteile, darunter eine von der Allradkupplung zur Sekundär- oder Hinterachse führende Verbindungswelle, die drehfest mit der Verbindungswelle verbundenen abtriebsseitigen Bauteile der Allradkupplung, sowie das Achsgetriebe der Sekundär- oder Hinterachse nebst Ausgleichsdifferenzial bzw. deren rotierende Bauteile. In geschlossenem Zustand der beiden Kupplungen werden sämtliche dieser rotierenden Bauteile von der Brennkraftmaschine angetrieben. Wenn die Kupplungen während der Fahrt geöffnet werden, führt dies dazu, dass die genannten Bauteile vom Antriebsstrang abgekoppelt werden und sich frei drehen. Da die Bauteile durch ein anliegendes Schleppmoment abgebremst werden, nimmt ihre Drehzahl allmählich auf null ab. Das Schleppmoment umfasst bremsende Momentenanteile, die unter anderem aus dem Ölpantschen eines Tellerrades des Achsgetriebes der Sekundär- oder Hinterachse sowie der Lagerreibung der Verbindungswelle in deren Drehlagern resultieren, sowie beschleunigende Momentenanteile, die unter anderem aus einer Drehzahldifferenz zwischen den antriebsseitigen und den abtriebseitigen Bauteilen der ölgefüllten Allradkupplung sowie aus der Reibung im Ausgleichsdifferenzial resultieren.

Bei der nächsten Zuschaltung des Allradantriebs müssen die zuvor vom Antriebsstrang abgekoppelten Bauteile wieder beschleunigt bzw. auf Drehzahl gebracht werden, wobei die notwendige Beschleunigung bzw. das zur Beschleunigung notwendige Drehmoment der Brennkraftmaschine von der momentanen Drehzahl der abgekoppelten Bauteile und dem anliegenden Schleppmoment abhängt.

Aus diesem Grund ist die Kenntnis des bei abgeschaltetem Allradantrieb anliegenden Schleppmoments wichtig, um bei der Zuschaltung der abgeschalteten Sekundär- oder Hinterachse die Drehzahl der abgekoppelten und frei rotierenden oder im Stillstand befindlichen Bauteile einerseits so schnell wie möglich an die Drehzahl der übrigen Bauteile des Antriebsstrangs anpassen zu können, ohne dass es andererseits zu einem spürbaren Ruck im Antriebsstrang und damit im Kraftfahrzeug kommt. Um eine komfortoptimale Zuschaltung zu erzielen, muss mit anderen Worten die Beschleunigung umso langsamer erfolgen, je größer das Schleppmoment oder die Schleppverluste sind, die einer Beschleunigung entgegenwirken.

Das anliegende Schleppmoment ist von mehreren Parametern abhängig, nämlich der Drehzahl der Bauteile, dem Ölstand in den Kupplungen und im Achsgetriebe, der Temperatur des Schmieröls im Achsgetriebe sowie vom Einlauf bzw. Verschleiß der Lager und Dichtungen. Der Ölstand in den Kupplungen und im Achsgetriebe ist beispielsweise bekannt, während die Drehzahl und die Schmieröltemperatur gemessen werden können. Beim Einlaufzustand bzw. beim Verschleiß der Lager und Dichtungen handelt es sich um Unbekannte, die geschätzt werden müssen. Das anliegende Schleppmoment wird augenblicklich für verschiedene Fahrzustände in Abhängigkeit von den oben genannten Parametern auf einem Prüfstand ermittelt und im Steuergerät des Kraftfahrzeugs fest hinterlegt.

Zur Kosteneinsparung soll jedoch zunehmend auf Sensoren verzichtet werden, darunter auch auf einen Sensor zur Messung der Schmieröltemperatur im Achsgetriebe der abschaltbaren Sekundär- oder Hinterachse. Wenn jedoch zu den Unbekannten Einlauf bzw. Verschleiß der Lager und Dichtungen noch weitere Unbekannte hinzu kommen, wie z.B. die Schmieröltemperatur oder der Ölstand im Achsgetriebe, ist eine sinnvolle Aussage über das anliegende Schleppmoment kaum mehr möglich. US 2007/193793 A offenbart ein Verfahren gemäß dem Oberbegriff des Anspruchs 1. Ausgehend hiervon liegt der Erfindung die Aufgabe zugrunde, ein Verfahren der eingangs genannten Art dahingehend zu verbessern, dass sich Defekte und insbesondere Lagerdefekte der rotierenden Bauteile frühzeitig feststellen lassen und dass sich das anliegende Schleppmoment auch ohne die Kenntnis der Schmieröltemperatur im Achsgetriebe ermitteln lässt.

Diese Aufgabe wird durch ein Verfahren gemäß Anspruch 1 gelöst.

Bei abgeschaltetem Allradantrieb wird die Drehzahl von mindestens einem der abgekoppelten Bauteile im zeitlichen Abstand gemessen und daraus wird eine Winkelbeschleunigung $\alpha$ der abgekoppelten Bauteile, das heißt die Ableitung $\dot{\omega}$ der Winkelgeschwindigkeit $\omega$, der abgekoppelten Bauteile ermittelt. Die Drehzahl von einem der abgekoppelten Bauteile kann zweckmäßig mit Hilfe eines Drehzahlsensors gemessen werden, der zum Beispiel die Drehzahl der Verbindungswelle oder eines Differenzialkorbs des Ausgleichsdifferenzials ermittelt. Sofern sich die Drehzahl von anderen abgekoppelten Bauteilen von der gemessenen Drehzahl unterscheidet, kann sie über das bekannte Übersetzungsverhältnis leicht berechnet werden.
In der Regel wird es sich bei der ermittelten Winkelbeschleunigung $\alpha$ um eine negative Winkelbeschleunigung handeln, das heißt um eine Abbremsung. Wenn der Betrag der negativen Winkelbeschleunigung oberhalb von einem zuvor durch Prüfstandversuche ermittelten vorgegebenen Schwellenwert oder Bereich liegt, wird eines der abgekoppelten Bauteile zu stark abgebremst, wodurch frühzeitig auf einen Lagerdefekt in einem Lager von einem der abgekoppelten Bauteile geschlossen und dieses entsprechend ausgetauscht werden kann, bevor es zu einem Lagerfressen kommt. Auch eine Unterschreitung eines vorgegebenen Schwellenwerts oder Bereichs kann auf einen Defekt hindeuten.

Darüber hinaus wird aus der ermittelten Winkelbeschleunigung $\alpha$ das anliegende Schleppmoment berechnet, da dieses vom Produkt aus der Winkelbeschleunigung $\alpha$ und dem Trägheitsmoment oder Massenträgheitsmoment J der abgekoppelten Bauteile abhängt. Das Trägheitsmoment oder Massenträgheitsmoment J der abgekoppelten Bauteile verändert sich über die Lebenszeit der Bauteile nicht und kann daher im Steuergerät als Konstante hinterlegt werden.

Da sich die abgekoppelten Bauteile während ihrer Abbremsung durch ein Drehzahlband bewegen, erfolgt die Drehzahlmessung vorteilhaft mehrere Male an unterschiedlichen Drehzahlstützstellen bzw. in unterschiedlichen Drehzahlbereichen, so dass die Winkelbeschleunigung und das Schleppmoment für mehrere unterschiedliche, im zeitlichen Abstand gemessene Drehzahlen ermittelt werden können. Dadurch lassen sich die Plausibilität oder Genauigkeit der ermittelten Winkelbeschleunigung und des berechneten Schleppmoments verbessern.

Bevorzugt wird das Schleppmoment nach der Beziehung MS = J x $\alpha$ + MBkonst - MAkonst berechnet, wobei J das Trägheitsmoment oder Massenträgheitsmoment und $\alpha$ die Winkelbeschleunigung der rotierenden Bauteile sind, und wobei MBkonst ein konstantes beschleunigendes Moment und MAkonst ein konstantes abbremsenden Moment ist. Wenn MAkonst und MBkonst bekannt sind, ergibt sich ein linearer Zusammenhang zwischen der ermittelten Winkelbeschleunigung und dem daraus berechneten Schleppmoment. Sofern MAkonst und MBkonst konstant sind, können sie auf dem Prüfstand ermittelt und im Steuergerät abgelegt werden. Sofern die beiden Momente nicht ganz konstant sind, können die variablen Anteile adaptiert werden.

Gemäß einer weiteren bevorzugten Ausgestaltung der Erfindung erfolgt beim nachfolgenden Zuschalten des Allradantriebs die Vorsteuerung des Drehmoments und damit die Beschleunigung der abgekoppelten Bauteile auf der Grundlage des berechneten Schleppmoments, um für einen komfortoptimalen ruckfreien Übergang vom Zweiradantrieb in den Allradantrieb zu sorgen. Mit anderen Worten wird beim aktiven Beschleunigen der abgekoppelten Bauteile das zum Beschleunigen aufgebrachte Drehmoment in Abhängigkeit vom berechneten Schleppmoment vorgesteuert. Da das Schleppmoment der Sekundärachse wegen der Temperaturabhängigkeit der Viskosität des Schmieröls im Achsgetriebe ebenfalls temperaturabhängig ist, wird dort, wo weder ein Temperatursensor verbaut werden soll noch im Steuergerät ein Modell der Veränderung des Schleppmoments in Abhängigkeit von der Temperatur hinterlegt ist, das berechnete Schleppmoment jeweils nur dann zur Vorsteuerung des Drehmoments beim nachfolgenden Zuschalten des Allradantriebs genutzt, wenn die Messung der Drehzahlen bzw. die Berechnung des Schleppmoments einerseits und die Zuschaltung des Allradantriebs andererseits zeitlich eng beieinander liegen. In diesem Fall kann davon ausgegangen werden, dass sich die Temperatur zwischen der Messung und der Vorsteuerung nicht oder nur unwesentlich verändert hat.

Wenn der Einfluss der Schmieröltemperatur auf das Schleppmoment bekannt und entsprechend ein Modell der Veränderung des Schleppmoments in Abhängigkeit von der Schmieröltemperatur im Steuergerät hinterlegt ist, kann gemäß einer weiteren vorteilhaften Ausgestaltung der Erfindung ein verschleißbedingter oder verschleißkompensierter Anteil des Schleppmoments berechnet werden, indem das aus dem Trägheitsmoment oder Massenträgheitsmoment und der Winkelbeschleunigung berechnete Schleppmoment mit einem im Steuergerät hinterlegten Referenz-Schleppmoment verglichen wird, das bei derselben Temperatur auf dem Prüfstand ermittelt wurde. Dort, wo kein Temperatursensor verbaut werden soll, kann zu diesem Zweck das Schleppmoment zu Beginn eines Fahrzyklus ermittelt werden, da die Schmieröltemperatur und die Temperatur der rotierenden Komponenten zu diesem Zeitpunkt der Umgebungstemperatur entsprechen, eine ausreichend lange Standzeit vorausgesetzt. Die Umgebungstemperatur wird normalerweise in Kraftfahrzeugen gemessen und ist daher bekannt, so dass sie vom Steuergerät genutzt werden kann.

Wenn gemäß einer weiteren vorteilhaften Ausgestaltung der Erfindung im Steuergerät ein Modell der Veränderung des Schleppmoments in Abhängigkeit von der Temperatur hinterlegt ist, kann auf der Grundlage des berechneten verschleißbedingten oder verschleißkompensierten Schleppmomentanteils die momentane Schmieröltemperatur im Achsgetriebe der Sekundärachse berechnet oder zumindest geschätzt werden.

Im Folgenden wird die Erfindung anhand eines in der Zeichnung dargestellten Ausführungsbeispiels näher erläutert.

Fig. 1 zeigt eine schematische Darstellung eines Antriebsstrangs eines Kraftfahrzeugs mit einem abschaltbaren Allradantrieb, bei dem die Hinterachse zu- und abschaltbar ist;

Fig. 2 zeigt den zeitlichen Verlauf der Drehzahl einer Verbindungswelle des Antriebsstrangs nach dem Öffnen einer Allradkupplung und einer Trennkupplung im Antriebsstrang;

Fig. 3 zeigt eine schematische Darstellung eines Antriebsstrangs eines anderen Kraftfahrzeugs mit einem abschaltbaren Allradantrieb, bei dem die Vorderachse zu- und abschaltbar ist.

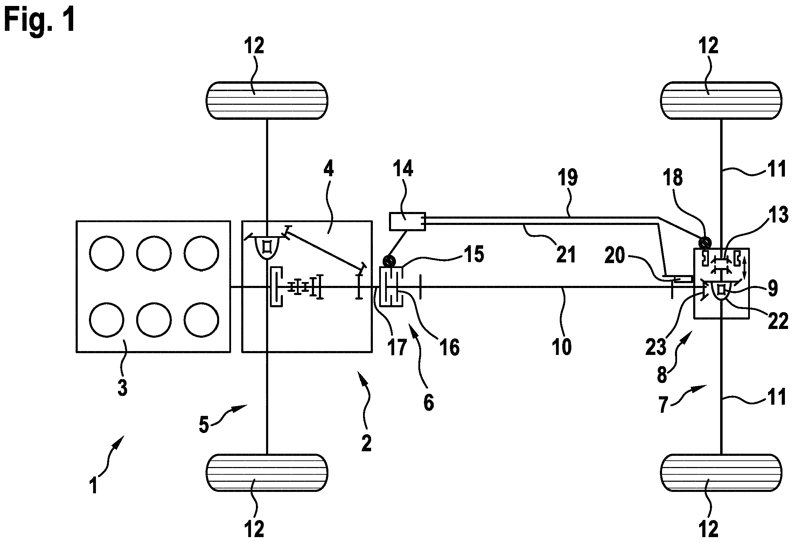

Das in Fig. 1 schematisch dargestellte Kraftfahrzeug 1 besitzt einen Antriebsstrang 2 mit einer Brennkraftmaschine 3 und einem der Brennkraftmaschine 3 nachgeschalteten Schaltgetriebe 4. Ein Ausgang des Getriebes 4 ist mit einer permanent angetriebenen Primärachse 5 des Kraftfahrzeugs 1 verbunden, bei der es sich um die Vorderachse handelt. Ein weiterer Ausgang des Getriebes 4 ist über eine Allradkupplung 6 mit einer zuschaltbaren Sekundärachse 7 verbindbar, bei der es sich um die Hinterachse handelt. Bei geöffneter Allradkupplung 6 liegt das Moment der Brennkraftmaschine 3 vollständig an der Primärachse 5 an. Bei geschlossener Allradkupplung 6 wird das Moment der Brennkraftmaschine 3 sowohl auf die Primärachse 5 und auf die Sekundärachse 7 verteilt.

Die Sekundärachse 7 umfasst ein Achsgetriebe 8 mit einem Ausgleichsdifferenzial 9, das durch eine Verbindungswelle 10 in Form einer Kardanwelle mit der Abtriebsseite der Allradkupplung 6 verbunden ist, zwei Seitengelenkwellen 11, die mit den Rädern 12 der Sekundärachse 7 und dem Ausgleichsdifferenzial 9 verbunden sind, sowie eine Trennkupplung 13. Die Allradkupplung 6 und die Trennkupplung 13 werden von einem Steuergerät 14 des Kraftfahrzeugs 1 geöffnet und geschlossen, um die Verbindungswelle 10 und das Achsgetriebe 8 nebst Ausgleichsdifferenzial 9 zum Abschalten des Allradantriebs vom Getriebe 4 und von den Seitengelenkwellen 11 zu trennen bzw. beim Zuschalten des Allradantriebs mit dem Getriebe 4 und den Seitengelenkwellen 11 zu verbinden.

Bei der Allradkupplung 6 handelt es sich um eine Reib- oder Lamellenkupplung mit zwei in einem Ölbad laufenden Lamellenpaketen 15, 16, von denen das Lamellenpaket 15 drehfest mit einer Ausgangswelle 17 des Getriebes 4 und das Lamellenpaket 16 drehfest mit der Verbindungswelle 10 verbunden ist. Die Trennkupplung 13 ist als Klauenkupplung ausgebildet und umfasst ein Schaltelement 18, das durch eine Steuerleitung 19 mit dem Steuergerät 14 verbunden ist. Am Achsgetriebe 8 ist ein Drehzahlsensor 20 angebracht, der die Drehzahl eines Differenzialkorbs 22 des Ausgleichsdifferenzials 9 misst und über eine Signalleitung 21 an das Steuergerät 14 übermittelt.

Das Zuschalten und Abschalten des Allradantriebs wird vom Steuergerät 14 in Abhängigkeit von der jeweiligen Fahrsituation vorgenommen. Das Abschalten des Allradantriebs dient dem Zweck, durch Minimierung des Schleppmoments des Achsgetriebes 8 der Sekundärachse 7 Verbrauchseinsparungen zu erzielen, wenn der Allradantrieb nicht benötigt wird.

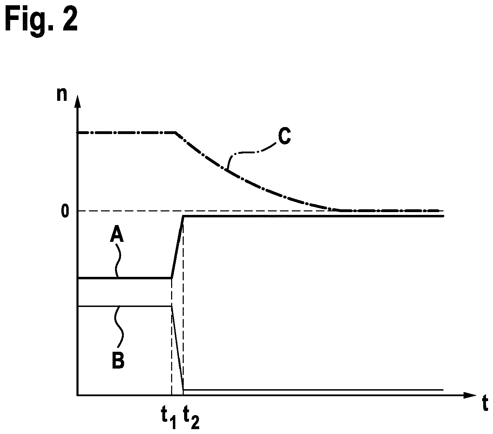

Beim Abschalten des Allradantriebs werden die geschlossene Allradkupplung 6 und die geschlossene Trennkupplung 13 im Zeitpunkt t1 geöffnet, wie in Fig. 2 durch die beiden Kurven A und B angezeigt. Sobald die Allradkupplung 6 vollständig gelüftet ist und die Trennkupplung 13 vollständig ausgerückt ist, wie in Fig. 2 im Zeitpunkt t2 dargestellt, sind die Verbindungswelle 10 mit den Lamellenpaketen 16 der Allradkupplung 6 sowie das Achsgetriebe 8 mit dem Ausgleichdifferenzial 9 bzw. deren rotierende Bauteile einerseits vom Getriebe 4 und andererseits von den Seitengelenkwellen 11 der Sekundärachse 7 abgekoppelt und drehen sich frei. Infolge des Schleppmoments, das auf die abgekoppelten Bauteile 8, 9, 10, 16 einwirkt, nimmt anschließend die Drehzahl n der Verbindungswelle 10 allmählich auf null ab, wie in Fig. 2 durch die Kurve C angezeigt.

Mit der Drehzahl n der Verbindungswelle 10 nimmt auch die Drehzahl n des Differentialkorbs 22 des Ausgleichsdifferenzials 9 ab, die vom Drehzahlsensor 20 in kurzen Zeitabständen Δt gemessen und durch die Signalleitung 21 an das Steuergerät 14 übermittelt wird.

Aus den übermittelten Drehzahlen n und den Zeitabständen Δt wird im Steuergerät 14 die negative Winkelbeschleunigung α oder Abbremsung des Differentialkorbs 22 und damit auch der Verbindungswelle 10 sowie der übrigen abgekoppelten Bauteile, wie z. B. der Lamellenpakete 16 und eines Triebsatzes 23 im Achsgetriebe 8, nach folgender Beziehung berechnet:

$$\alpha = \frac{d\omega}{dt} = \dot{\omega}$$

wobei ω die Winkelgeschwindigkeit der abgekoppelten Bauteile 10, 16, 22, 23 und $\dot{\omega}$ die erste Ableitung der Winkelgeschwindigkeit ω über der Zeit t oder der Gradient der Winkelgeschwindigkeit ω ist.

Wenn die berechnete Winkelbeschleunigung α nach einer kurzen Entprellzeit, die von der Geschwindigkeit und von der Längsbeschleunigung des Kraftfahrzeugs 1 im Zeitpunkt t1 abhängt, einen in Prüfstandversuchen ermittelten vorbestimmten Wert übersteigt, der anzeigt, dass die abgekoppelten Bauteile 10, 16, 22, 23 schneller als erwartet abgebremst werden, kann auf einen Defekt geschlossen werden, bei dem es sich mit hoher Wahrscheinlichkeit um einen Lagerdefekt in einem der Drehlager der Verbindungswelle 10 handelt.

Außerdem steht die berechnete Winkelbeschleunigung α nach der Entprellzeit in folgendem Zusammenhang mit einem Schleppmoment MS der Sekundärachse:

$$\alpha = \frac{MS + MAkonst + MBkonst}{J}$$

wobei MAkonst ein konstanter abbremsender Momentenanteil, MBkonst ein konstanter beschleunigender Momentenanteil und J das Trägheitsmoment oder Massenträgheitsmoment der abgekoppelten Bauteile 10, 16, 22, 23 ist.

MAkonst und MBkonst werden in Prüfstandversuchen ermittelt und im Steuergerät 14 abgelegt. Das Trägheitsmoment oder Massenträgheitsmoment J der abgekoppelten Bauteile 10, 16, 22, 23 ist bekannt und wird ebenfalls im Steuergerät 14 abgelegt.

Damit kann im Steuergerät 14 das Schleppmoment MS der Sekundärachse 7 nach folgender Beziehung ermittelt werden:

$$MS = (J \times \alpha) + MBkonst - MAkonst$$

Das vom Steuergerät 14 ermittelte Schleppmoment MS kann zur Optimierung der Vorsteuerung der von der Brennkraftmaschine 3 aufgebrachten Drehmomente bei der nächsten Zuschaltung des Allradantriebs genutzt werden. Wenn weder ein Temperatursensor im Achsgetriebe 8 verbaut noch im Steuergerät 14 ein Modell der Abhängigkeit des Schleppmoments MS von der Öltemperatur im Achsgetriebe 8 hinterlegt ist, darf allerdings wegen dieser Abhängigkeit die Zeit zwischen der Messung der in die Berechnung des Schleppmoments MS einfließenden Drehzahlen n und der Zuschaltung des Allradantriebs nicht zu lang sein, um zwischenzeitliche Temperaturänderungen auszuschließen.

Wenn der Einfluss der Öltemperatur im Achsgetriebe 8 auf das Schleppmoment MS durch vorangehende Prüfstandversuche bekannt und die Temperaturabhängigkeit des Schleppmoments MS im Steuergerät 14 hinterlegt ist, können darüber hinaus Aussagen über einen durch Verschleiß bedingten oder verschleißkompensierten Anteil des Schleppmoments MS getroffen werden. Zu diesem Zweck erfolgen die Messung der Drehzahlen n sowie die Ermittlung der Winkelbeschleunigung α und die Berechnung des Schleppmoments MS zu Beginn eines Fahrzyklus, solange die Temperatur der abgekoppelten Bauteile 10, 16, 22, 23 und des Schmieröls im Achsgetriebe 8 noch der Umgebungstemperatur entsprechen und somit die Öltemperatur bekannt ist. Das berechnete Schleppmoment MS wird dann mit einem durch Prüfstandversuche für dieselbe Temperatur ermittelten und im Steuergerät 14 hinterlegten Referenz-Schleppmoment MSRef verglichen. Wenn das berechnete Schleppmoment MS das hinterlegte Schleppmoment MSRef um einen gewissen Betrag übersteigt, entspricht dieser Betrag dem verschleißbedingten Anteil des Schleppmoments MS.

Sofern sich der verschleißbedingte Anteil des Schleppmoments nicht mit der Temperatur verändert und die Abhängigkeit des nicht-verschleißbedingten Anteils des Schleppmoments MS von der Öltemperatur im Achsgetriebe 8 im Steuergerät 14 hinterlegt ist, kann der verschleißbedingte Anteil des Schleppmoments MS wiederum genutzt werden, um Aussagen über die momentane Öltemperatur im Achsgetriebe 8 zu machen.

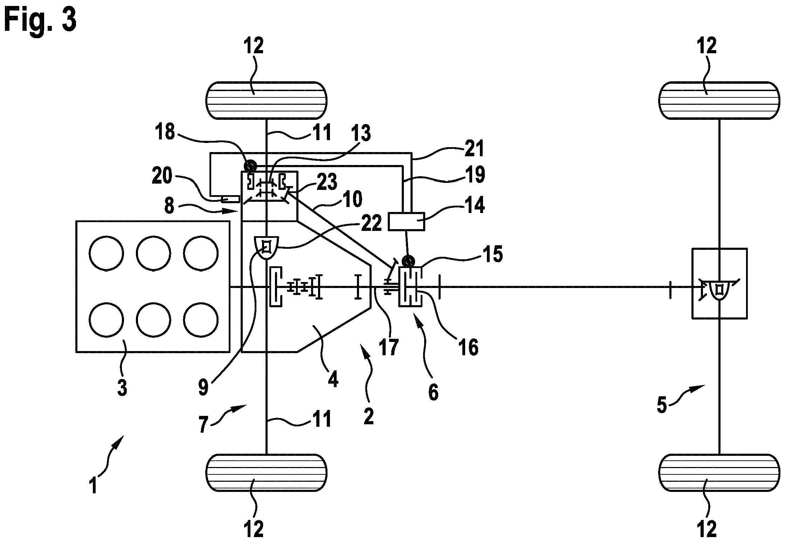

Das in Fig. 3 schematisch dargestellte Kraftfahrzeug 1 unterscheidet sich von dem Kraftfahrzeug in Fig. 1 dadurch, dass es sich bei der permanent angetriebenen Primärachse 5 um die Hinterachse und bei der über die Allradkupplung 6 zuschaltbaren Sekundärachse um die Vorderachse 7 des Kraftfahrzeugs 1 handelt. Das Ausgleichsdifferenzial 9 ist dort als Achsdifferenzial ausgebildet und vom Achsgetriebe 8 getrennt. Entsprechende Teile wie in Fig. 1 sind mit denselben Bezugszeichen bezeichnet. Wie zuvor beschrieben wird auch hier die Drehzahl von einem der abgekoppelten Bauteile 10, 16, 22, 23 im zeitlichen Abstand gemessen und daraus eine Winkelbeschleunigung α der abgekoppelten Bauteile 10, 16, 22, 23 ermittelt. Auch die übrigen zuvor beschriebenen Verfahrensschritte sind dieselben.

**Patentansprüche**

1. Verfahren zum Betreiben eines Kraftfahrzeugs (1) mit einem zu- und abschaltbaren Allradantrieb und einem Antriebsstrang (2), der zwei von einem Steuergerät (14) angesteuerte Kupplungen (6, 13) zum Zu- und Abschalten des Allradantriebs und zwischen den beiden Kupplungen (6, 13) rotierende Bauteile (10, 16, 22, 23) umfasst, die bei zugeschaltetem Allradantrieb angetrieben werden und bei abgeschaltetem Allradantrieb vom übrigen Antriebsstrang (2) abgekoppelt sind, wobei bei abgeschaltetem Allradantrieb die Drehzahl (n) von mindestens einem der abgekoppelten Bauteile (10, 16, 22, 23) im zeitlichen Abstand gemessen wird, **dadurch gekennzeichnet, dass** aus der gemessenen Drehzahl eine Winkelbeschleunigung (a) der abgekoppelten Bauteile (10, 16, 22, 23) ermittelt wird, wobei auf der Grundlage der ermittelten Winkelbeschleunigung (α) und des Trägheitsmoments oder Massenträgheitsmoments (J) der abgekoppelten Bauteile (10, 16, 22, 23) ein Schleppmoment (MS) berechnet wird.

2. Verfahren nach Anspruch 1, **dadurch gekennzeichnet, dass** auf einen Defekt geschlossen wird, wenn die ermittelte Winkelbeschleunigung (a) einen vorbestimmten kritischen Schwellenwert übersteigt oder unterschreitet.

3. Verfahren nach Anspruch 1, **dadurch gekennzeichnet, dass** das Schleppmoment (MS) für mehrere unterschiedliche, im zeitlichen Abstand gemessene Drehzahlen (n) berechnet wird.

4. Verfahren nach einem der vorhergehenden Ansprüche, **dadurch gekennzeichnet, dass** das Schleppmoment (MS) gemäß der Beziehung

$$MS = J \times \alpha + MAkonst - MBkonst$$

berechnet wird, wobei J das Trägheitsmoment oder Massenträgheitsmoment und α die Winkelbeschleunigung der abgekoppelten Bauteile (10, 16, 22, 23) sind, MAkonst ein konstantes abbremsendes Moment und MBkonst ein konstantes beschleunigendes Moment ist.

5. Verfahren nach einem der vorhergehenden Ansprüche, **dadurch gekennzeichnet, dass** beim nächsten aktiven Beschleunigen der abgekoppelten Bauteile (10, 16, 22, 23) das Drehmoment zum Beschleunigen in Abhängigkeit vom berechneten Schleppmoment (MS) vorgesteuert wird.

6. Verfahren nach Anspruch 5, **dadurch gekennzeichnet, dass** die Vorsteuerung des Drehmoments zur Beschleunigung der abgekoppelten Bauteile (10, 16, 22, 23) in Abhängigkeit vom berechneten Schleppmoment (MS) nur vorgenommen wird, wenn die Zeitspanne zwischen den Messungen der Drehzahl (n) von mindestens einem der abgekoppelten Bauteile (10, 16, 22, 23) und dem Zuschalten des Allradantriebs eine vorbestimmte Zeitspanne unterschreitet.

7. Verfahren nach einem der vorhergehenden Ansprüche, **dadurch gekennzeichnet, dass** das berechnete Schleppmoment (MS) mit einem gespeicherten Referenz-Schleppmoment (MSRef) verglichen und daraus auf einen verschleißbedingten oder verschleißkompensierten Anteil des Schleppmoments (MS) geschlossen wird.

8. Verfahren nach Anspruch 7, **dadurch gekenn-**

**zeichnet, dass** aus dem verschleißkompensierten Anteil des Schleppmoments (MS) eine momentane Öltemperatur in einem Achsgetriebe (8) ermittelt wird.

## Claims

1. Method for operating a vehicle (1) comprising an all-wheel drive that can be enabled and disabled and a drive train (2) which comprises two clutches (6, 13) actuated by a control unit (14) for enabling and disabling the all-wheel drive and components (10, 16, 22, 23) rotating between the two clutches (6,13), the components being driven when the all-wheel drive is enabled and are uncoupled from the remaining drive train (2) when the all-wheel drive is disabled, wherein when the all-wheel drive is disabled, the rotational speed (n) of at least one of the uncoupled components (10, 16, 22, 23) is measured in a time interval, **characterised in that** from the measured rotational speed an angular acceleration (a) of the uncoupled components (10, 16, 22, 23) is determined, wherein a drag torque (DT) is calculated on the basis of the determined angular acceleration (a) and a moment of inertia or mass moment of inertia (J) of the uncoupled components (10, 16, 22, 23).

2. Method according to claim 1, **characterised in that** a defect is indicated when the determined angular acceleration (a) fails to meet or exceeds a predetermined critical threshold value.

3. Method according to claim 1, **characterised in that** the drag torque (DT) is calculated for a plurality of different rotational speeds (n) measured in the time interval.

4. Method according to any of the preceding claims, **characterised in that** the drag torque (DT) is calculated according to the relationship

$$DT = J \times \alpha + DecTconst - AccTconst$$

where J is the moment of inertia or mass moment of inertia and α is the angular acceleration of the uncoupled components (10, 16, 22, 23), where DecTconst is a constant decelerating torque, and AccTconst is a constant accelerating torque.

5. Method according to any of the preceding claims, **characterised in that** the torque for acceleration is pilot-controlled as a function of the calculated drag torque (DT) upon the next active acceleration of the uncoupled components (10, 16, 22, 23).

**6.** Method according to claim 5, **characterised in that** the pilot control of the torque for accelerating the uncoupled components (10, 16, 22, 23) is only carried out as a function of the calculated drag torque (DT) when the time period between the measurements of the rotational speed (n) of at least one of the uncoupled components (10, 16, 22, 23) and the engagement of the all-wheel drive is less than a predetermined time period.

**7.** Method according to any of the preceding claims, **characterised in that** the calculated drag torque (DT) is compared with a stored reference drag torque (DTref) and from the latter a conclusion is drawn about a wear-induced or wear-compensated component of the drag torque (DT).

**8.** Method according to claim 7, **characterised in that** a current oil temperature is determined in an axle drive (8) from the wear-compensated component of the drag torque (DT).

## Revendications

**1.** Procédé servant à faire fonctionner un véhicule automobile (1) avec un entraînement à quatre roues motrices pouvant être activé et désactivé et une chaîne cinématique (2), qui comprend deux embrayages (6, 13) pilotés par un appareil de commande (14) servant à activer et à désactiver l'entraînement à quatre roues motrices et des composants (10, 16, 22, 23) qui tournent entre les deux embrayages (6, 13), qui sont entraînés lorsque l'entraînement à quatre roues motrices est activé et sont désaccouplés de la chaîne cinématique (2) restante lorsque l'entraînement à quatre roues motrices est désactivé, dans lequel la vitesse de rotation (n) d'au moins un des composants (10, 16, 22, 23) désaccouplé est mesurée à un intervalle donné lorsque l'entraînement à quatre roues motrices est désactivé, **caractérisé en ce qu'**une accélération angulaire (a) des composants (10, 16, 22, 23) désaccouplés est déterminée à partir de la vitesse de rotation mesurée, dans lequel un couple de traînée (MS) est calculé sur la base de l'accélération angulaire (a) déterminée et du couple d'inertie ou du couple d'inertie de masse (J) des composants (10, 16, 22, 23) désaccouplés.

**2.** Procédé selon la revendication 1, **caractérisé en ce qu'**un défaut est déduit quand l'accélération angulaire (a) déterminée dépasse une valeur de seuil critique prédéfinie ou présente une valeur inférieure à cette dernière.

**3.** Procédé selon la revendication 1, **caractérisé en ce que** le couple de traînée (MS) est calculé pour plusieurs vitesses de rotation (n) mesurées à intervalle donné.

**4.** Procédé selon l'une quelconque des revendications précédentes, **caractérisé en ce que** le couple de traînée (MS) est calculé selon la relation

$$MS = J \times \alpha + MAkonst - Mbkonst$$

dans lequel J est le couple d'inertie ou le couple d'inertie de masse et $\alpha$ est l'accélération angulaire des composants (10, 16, 22, 23) désaccouplés, MAkonst est un couple de ralentissement constant et MBkonst est un couple d'accélération constant.

**5.** Procédé selon l'une quelconque des revendications précédentes, **caractérisé en ce que** lors de la prochaine accélération active des composants (10, 16, 22, 23) désaccouplés, le couple de rotation est précommandé aux fins de l'accélération en fonction du couple de traînée (MS) calculé.

**6.** Procédé selon la revendication 5, **caractérisé en ce que** la précommande du couple de rotation est effectuée afin d'accélérer les composants (10, 16, 22, 23) désaccouplés en fonction du couple de traînée (MS) calculé seulement quand l'intervalle de temps entre les mesures de la vitesse de rotation (n) d'au moins un des composants (10, 16, 22, 23) désaccouplés et l'activation de l'entraînement à quatre roues motrices présente une valeur inférieure à l'intervalle de temps prédéfini.

**7.** Procédé selon l'une quelconque des revendications précédentes, **caractérisé en ce que** le couple de traînée (MS) calculé est comparé à un couple de traînée de référence (MSRef) sauvegardé et une fraction, liée à l'usure ou compensée par l'usure, du couple de traînée (MS) est déduite sur cette base.

**8.** Procédé selon la revendication 7, **caractérisé en ce qu'**une température d'huile instantanée dans une transmission d'axe (8) est déterminée sur la base de la fraction compensée par l'usure du couple de traînée (MS).

Fig. 1

## Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012020908 A1
- US 2007193793 A